(19) Europäisches Patentamt / European Patent Office / Office européen des brevets

(11) **EP 2 644 675 B1**

(12) **EUROPEAN PATENT SPECIFICATION**

(45) Date of publication and mention
of the grant of the patent:
**21.10.2015 Bulletin 2015/43**

(51) Int Cl.:
***C08F 220/34*** (2006.01)     ***C09J 4/06*** (2006.01)
***C09J 133/06*** (2006.01)     ***C09J 133/08*** (2006.01)

(21) Application number: **11842758.2**

(22) Date of filing: **24.11.2011**

(86) International application number:
**PCT/KR2011/009023**

(87) International publication number:
**WO 2012/070887 (31.05.2012 Gazette 2012/22)**

(54) **ADHESIVE COMPOSITION FOR TOUCH PANEL, ADHESIVE FILM, AND TOUCH PANEL**

HAFTZUSAMMENSETZUNG FÜR EINEN BERÜHRUNGSBILDSCHIRM, HAFTFILM UND BERÜHRUNGSBILDSCHIRM

COMPOSITION D'ADHÉSIF POUR ÉCRAN TACTILE, FILM ADHÉSIF ET ÉCRAN TACTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2010 KR 20100117761**

(43) Date of publication of application:
**02.10.2013 Bulletin 2013/40**

(73) Proprietor: **LG Hausys, Ltd.**
**Seoul 150-721 (KR)**

(72) Inventors:
 • **KIM, Jang-Soon**
   **Seongnam-si**
   **Gyeonggi-do 463-889 (KR)**
 • **SONG, Min-Seok**
   **Anyang-si, Gyeonggi-do 431-080 (KR)**
 • **PARK, Eun-Kyung**
   **Seoul 122-881 (KR)**
 • **KIM, Seong-Jin**
   **Suwon-si**
   **Gyeonggi-do 443-801 (KR)**
 • **CHA, Hyung-Min**
   **Cheongju-si**
   **Chungcheongbuk-do 361-300 (KR)**
 • **LEE, Won-Yup**
   **Cheongju-si**
   **Chungcheongbuk-do 361-856 (KR)**
 • **KIM, Woong-Gi**
   **Chungcheongbuk-do 361-856 (KR)**

(74) Representative: **Zacco Denmark A/S**
**Arne Jacobsens Allé 15**
**2300 Copenhagen S (DK)**

(56) References cited:
**EP-A1- 1 574 557**     **EP-A2- 2 033 998**
**JP-A- 2001 335 757**     **JP-A- 2005 255 877**
**KR-A- 20100 022 945**     **US-A1- 2010 255 253**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to an adhesive composition for a touch panel, an adhesive film, and a touch panel.

[Background Art]

Recently, the market for electronic equipment, such as personal digital assistants (PDAs), mobile communication terminals, or automotive navigation systems, is growing. Such electronic equipment is moving towards slimness, light weight, low power consumption, high resolution, and high brightness.

An electronic device equipped with a touchscreen or touch panel switch as an input device uses a transparent conductive plastic film in consideration of weight and durability. An example of the transparent conductive plastic film is a polyethylene terephthalate (PET) base film having a conductive layer of indium tin oxide (ITO) formed on one side thereof, which is stacked on conductive glass, a reinforcing material, or a decorative film through an adhesive film.

An adhesive used to attach a transparent conductive film in a touchscreen or touch panel is required to have various physical properties, such as surface leveling properties for relieving an uneven surface due to a decorative film, durability for suppressing generation of curls or bubbles when exposed to severe conditions, e.g., high temperature or high humidity, cuttability for preventing the adhesive from sticking out or being squeezed when cut, and excellent adhesion and wettability to various substrates as well as cohesiveness.

Recently, as patterned ITO PET is used as a transparent conductive film, an adhesive is required to hide an ITO pattern or to allow the pattern to be invisible within 3 hours when attached to a patterned ITO surface. Since the adhesive completely fills an etched uneven surface of the ITO immediately after attachment to the patterned ITO surface, the ITO pattern is not visible. However, under high-temperature and high-humidity conditions, the adhesive is separated from the ITO by heat, and thus a space may be created between the etched uneven surface of the ITO and the adhesive. Here, when vapor infiltrates the space and condenses into water, the ITO pattern may be visually recognized due to difference in refractive indices. Thus, there is a demand for development of an adhesive which is not separated from the ITO surface under high-temperature and high-humidity conditions.

EP 1574557 A1 relates to a transparent double-sided pressure-sensitive adhesive tape or sheet containing a transparent substrate and a transparent pressure-sensitive adhesive layer disposed on each side of the substrate. The transparent pressure-sensitive adhesive layer disposed on at least one side of the transparent substrate is a layer formed from a pressure-sensitive adhesive composition containing a specific acrylic polymer (a) and a specific oligomer (b).

EP 2033998 A2 discloses a pressure-sensitive adhesive composition which contains an acrylic polymer and a crosslinking agent. The acrylic polymer has a weight-average molecular weight of $40 \times 10^4$ to $160 \times 10^4$ and contains at least an alkoxyalkyl acrylate (Component A) and an acrylic monomer having a crosslinkable functional group (Component B). The monomer components constituting the acrylic polymer contain 45 to 99.5 parts by weight of Component A and 0.5 to 4.5 parts by weight of Component B to 100 parts by weight of total monomer components constituting the acrylic polymer, and the monomer components constituting the acrylic polymer contain no carboxyl-containing monomers. This pressure-sensitive adhesive compositions show excellent coatability, transparency, adhesion (typically low-temperature adhesion), and resistance to blistering/separation and concurrently have anticorrosive properties.

US 2010/255253 A1 discloses a double-sided pressure-sensitive adhesive sheet, which includes a pressure-sensitive adhesive layer formed from a pressure-sensitive adhesive composition that contains an acrylic polymer constituted from one or more monomer components containing a (meth) acrylic acid alkyl ester wherein the number of carbons of the alkyl group is from 1 to 12 and/or a (meth)acrylic acid alkoxyalkyl ester, in which the soluble fraction (sol fraction) obtained by ethyl acetate extraction of the pressure-sensitive adhesive layer has a weight average molecular weight of from 50,000 to 500,000, and the pressure-sensitive adhesive layer has a thickness unevenness of the whole surface of 0.030 $\mu$m or less.

[Disclosure]

[Technical Problem]

The present invention is aimed at providing an adhesive composition for a touch panel, an adhesive film, and a touch panel.

[Technical Solution]

In accordance with one aspect of the present invention, an adhesive composition for a touch panel comprising a partially polymerized acrylic resin; a multifunctional crosslinking agent; and urethane acrylate and satisfying Equation 1:

$$\text{Equation 1:} \quad X = 31000 \text{ kg/m2 } (20 \text{ kg/in}^2) \text{ or higher,}$$

wherein X is the shear strength of an adhesive measured at 100°C that is a cured product of the adhesive composition, measured on a sample at a crosshead speed of 5 mm/min, the sample being prepared as follows: one side of the adhesive is attached to a first substrate and the other side thereof is attached to a second substrate, followed by storage at 100°C for 1 hour wherein the partially polymerized acrylic resin has a weight average molecular weight of 1,000,000 or higher and a degree of polymerization of 5 to 60%, and the multifunctional crosslinking agent comprises multifunctional (meth)acrylates.

In accordance with another aspect of the present invention, an adhesive film for a touch panel includes: a base film; and an adhesive layer formed on one side or both sides of the base film and including a cured product of the adhesive composition according to the present invention.

In accordance with a further aspect of the present invention, a touch panel includes: a conductive plastic film having a conductive layer formed on one surface thereof; and an adhesive layer attached to the conductive layer of the conductive plastic film and including a cured product of the adhesive composition according to the present invention.

[Advantageous Effects]

According to the present invention, an adhesive composition for a touch panel may be applied to a touch panel, for example, to an electrostatic capacitive touch panel, for hiding a pattern of a conductive layer even when attached directly to the conductive layer formed with the pattern. Also, the adhesive composition of the present invention can prevent yellowing and whitening.

[Description of Drawings]

Fig. 1 is a sectional view of an adhesive film according to one embodiment of the present invention.
Fig. 2 is a sectional view of an adhesive film according to another embodiment of the present invention.
Fig. 3 illustrates a touch panel according to one embodiment of the present invention.
Fig. 4 illustrates a touch panel according to another embodiment of the present invention.

[Best Mode]

The present invention relates to an adhesive composition for a touch panel comprising a partially polymerized acrylic resin; a multifunctional crosslinking agent; and urethane acrylate and satisfying Equation 1:

$$\text{Equation 1:} \quad X = 31000 \text{ kg/m2 } (20 \text{ kg/in}^2) \text{ or higher,}$$

wherein X is the shear strength of an adhesive measured at 100°C that is a cured product of the adhesive composition, measured on a sample at a crosshead speed of 5 mm/min, the sample being prepared as follows: one side of the adhesive is attached to a first substrate and the other side thereof is attached to a second substrate, followed by storage at 100°C for 1 hour wherein the partially polymerized acrylic resin has a weight average molecular weight of 1,000,000 or higher and a degree of polymerization of 5 to 60%, and the multifunctional crosslinking agent comprises multifunctional (meth)acrylates.

Hereinafter, the adhesive composition for the touch panel of the present invention will be described in detail.

The adhesive composition according to the present invention includes a partially polymerized acrylic resin and a multifunctional crosslinking agent and has a shear strength measured at 100°C satisfying Equation 1. That is, the adhesive of the present invention has a shear strength of 20 $kg/in^2$ or higher, preferably 23 $kg/in^2$ or higher, as measured at 100°C.

In the present invention, there is no particular restriction as to a method of measuring the shear strength at 100°C of the adhesive. For example, the shear strength at 100°C may be measured as follows. First, the adhesive composition of the present invention is formed into an adhesive, which is cut into a 1 in x 1 in (width x length) piece, thus preparing a sample. One side of the sample is attached to a first substrate, for example, an ITO surface of a polyethylene terephthalate (PET) film having the ITO surface, and the other side thereof is attached to a second substrate, for example, an SUS surface, after which the sample is left at 100°C for 1 hour. Then, the shear strength measured at 100°C of the sample is measured at a crosshead speed of 5 mm/min using a universal testing machine (UTM, Zwick). In detail, the shear strength at 100°C may be measured according to a process to be mentioned in the following examples of the specification.

In the present invention, the shear strength measured at 100°C of the adhesive is adjusted to 20 Kg/in$^2$ or higher, and accordingly the adhesive can maintain excellent wettability or adhesion to a variety of objects to hide a pattern of a conductive layer when attached to the patterned conductive layer (e.g., ITO layer), particularly in application to a touch panel.

In the present invention, an upper limit of the shear strength measured at 100°C is, without being limited to, for example, 70 Kg/in$^2$ or lower, preferably 60 Kg/in$^2$ or lower, and more preferably 50 Kg/in$^2$ or lower.

The partially polymerized acrylic resin has a weight average molecular weight of 1,000,000 or higher, preferably 1,000,000 to 1,500,000. In the present invention, weight average molecular weight is based on a polystyrene standard, measured by gel permeation chromatography (GPC). If the partially polymerized acrylic resin has a weight average molecular weight of 1,000,000 or higher, an adhesive can have excellent durability under high-temperature or high-humidity conditions and does not contaminate an object by transferring to the object in re-peeling.

In the present invention, the partially polymerized acrylic resin has a mixed state of a pre-polymer and a monomer. The pre-polymer is a monomer in an intermediate state, which is capable of undergoing further polymerization.

The partially polymerized acrylic resin has a degree of polymerization of 5 to 60%, preferably 10 to 35%. In the present invention, the degree of polymerization refers to a weight ratio of monomers polymerized into polymers to monomers used in polymerization. If the degree of polymerization is less than 5%, the adhesive is not easy to process due to low viscosity. If the degree of polymerization is greater than 60%, the viscosity of the adhesive can increase, thereby deteriorating processability.

There is no particular restriction as to a composition of the acrylic resin. In the present invention, the acrylic resin may be, for example, a polymer of a monomer mixture including a (meth)acrylic acid ester monomer and a crosslinking monomer.

There is no particular restriction as to the kind of the (meth)acrylic acid ester monomer, which may include, for example, alkyl (meth)acrylates. In this case, when too long of an alkyl group is included in the monomer, the cohesiveness of the cured product may decrease and the glass transition temperature or tack of the cured product may not be properly adjusted. Thus, alkyl (meth)acrylates having a C1 to C14, preferably C1 to C8, alkyl group are used. Examples of such monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isobornyl (meth)acrylate, or isononyl methacrylate, which may be used alone or as mixtures.

The crosslinking monomer included in the monomer mixture is a monomer including both a copolymerizable functional group (e.g., carbon-carbon double bond) and a crosslinking functional group and may provide a polymer with a crosslinking functional group reacting with the multifunctional crosslinking agent.

Examples of the crosslinking monomer may include a hydroxyl group containing monomer, a carboxylic group containing monomer, or a nitrogen containing monomer, which may be used alone or as mixtures. Examples of the hydroxyl group containing monomer may include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, or 2-hydroxypropylene glycol (meth)acrylate, without being limited thereto. Examples of the carboxylic group containing monomer may include acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, or maleic acid, without being limited thereto. Examples of the nitrogen containing monomer may include 2-isocyanatoethyl (meth)acrylate, 3-isocyanatopropyl (meth)acrylate, 4-isocyanatobutyl (meth)acrylate, (meth)acryl amide, N-vinylpyrrolidone, or N-vinylcaprolactam, without being limited thereto.

In the present invention, the monomer mixture includes 70 to 99.9 parts by weight of the (meth)acrylic acid ester monomer and 0.1 to 30 parts by weight of the crosslinking monomer, preferably 75 to 99.9 parts by weight of the (meth)acrylic acid ester monomer and 0.1 to 25 parts by weight of the crosslinking monomer. Within this range, the adhesive can have excellent reliability, handling properties, durability and re-peeling properties, and can effectively prevent separation or peeling due to decrease in initial adhesive strength.

Unless otherwise indicated in the specification, "parts by weight" denotes "ratio by weight."

In the present invention, there is no particular restriction as to a method of manufacturing the acrylic resin by polymerizing the monomer mixture including the foregoing ingredients. For example, a general polymerization method, such as solution polymerization, photo-polymerization, bulk polymerization, suspension polymerization, or emulsion polymerization, may be used.

The adhesive composition for the touch panel of the present invention may include the multifunctional crosslinking agent along with the acrylic resin, and cohesiveness or tack of the cured product may be adjusted based on the amount of the multifunctional crosslinking agent.

The multifunctional crosslinking agent used in the present invention may include, without being limited to, for example, multifunctional (meth)acrylates. The multifunctional (meth)acrylates are polymeric compounds containing at least two (meth)acrylate moieties.

Examples of multifunctional (meth)acrylates may include at least one selected from the group consisting of hexanediol di(meth)acrylate, trimethylolpropanetrioxyethyl di(meth)acrylate, alkylene glycol di(meth)acrylate, dialkylene glycol di(meth)acrylate, trialkylene glycol di(meth)acrylate, dicyclopentenyl di(meth)acrylate, dicyclopentenyloxyethyl di(meth)acrylate, neopentyl glycol di(meth)acrylate, dipentaerythritolhexa di(meth)acrylate, trimethylolpropane tri(meth)acrylate, and pentaerythritol tri(meth)acrylate, without being limited thereto.

In the present invention, the multifunctional crosslinking agent is present in an amount of 0.01 to 10 parts by weight, preferably 0.05 to 5 parts by weight, more preferably 0.1 to 3 parts by weight based on 100 parts by weight of the partially polymerized acrylic resin. If the amount of the multifunctional crosslinking agent is less than 0.01 parts by weight, the cohesiveness of the cured product may be reduced, causing bubbles under high-temperature conditions. If the amount of the multifunctional crosslinking agent is greater than 10 parts by weight, the adhesive is excessively cured, causing decrease in adhesive strength and peel strength. Thus, peeling or separation between layers may occur, reducing durability.

The adhesive composition for the touch panel of the present invention may include urethane acrylate along with the multifunctional crosslinking agent in order to adjust the cohesiveness and tack of the cured product. The urethane acrylate, along with the multifunctional crosslinking agent, may improve the cohesiveness and tack of the cured product and provide a flexible molecular structure.

In the present invention, the urethane acrylate is present in an amount of 0.1 to 10 parts by weight, preferably 0.5 to 5 parts by weight, more preferably 1 to 3 parts by weight based on 100 parts by weight of the partially polymerized acrylic resin. If the amount of the urethane acrylate is less than 0.1 parts by weight, the urethane acrylate may not function properly. If the amount of the urethane acrylate is greater than 10 parts by weight, the adhesive may be excessively cured, reducing tack.

The adhesive composition of the present invention may further include a photoinitiator in order to adjust the degree of polymerization of the adhesive. The photoinitiator is present in an amount of 0.01 to 10 parts by weight, preferably 0.1 to 5 parts by weight based on 100 parts by weight of the partially polymerized acrylic resin. There is no particular restriction as to the kind of the photoinitiator so long as the photoinitiator can generate radicals upon light irradiation to initiate polymerization. Examples of the photoinitiator may include benzoin, hydroxyketone, or aminoketone initiators, more specifically benzoin, benzoin methyl ether, benzoin ethyl ether, benzoin isopropyl ether, benzoin n-butyl ether, benzoin isobutyl ether, acetophenone, dimethylaminoacetophenone, a,a-methoxy-a-hydroxyacetophenone, 2,2-dimethoxy-2-phenylacetophenone, 2,2-diethoxy-2-phenylacetophenone, 2-hydroxy-2-methyl-1-phenylpropane-1-one, 1-hydroxycyclohexyl phenyl ketone, 2-methyl-1 -[4-(methylthio)phenyl]-2-morpholino-propane-1 -one, 4-(2-hydroxyethoxy)phenyl-2-(hydroxy-2-propyl)ketone, benzophenone, 4,4'-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, and oligo[2-hydroxy-2-methyl-1-[4-(1-methylvinyl)phenyl]propanone], without being limited thereto. These initiators may be used alone or as mixtures.

As used herein, the term "light irradiation" refers to electromagnetic irradiation which affects the photoinitiator or the polymeric compound to cause polymerization. Electromagnetic radiation collectively includes not only microwaves, infrared radiation, ultraviolet radiation, X-rays, and γ-rays but also particle beams, such as α-particle rays, proton beams, neutron beams, and electron beams.

The adhesive composition of the present invention may further include a silane coupling agent. The coupling agent functions to enhance adhesion and adhesive stability of the cured product to an object, thus improving heat resistance and moisture resistance. Also, the coupling agent may enhance adhesive reliability of the cured product when the cured product is left under high-temperature and/or high-humidity conditions for a long time.

There is no particular restriction as to the kind of the silane coupling agent, and examples of the silane coupling agent may include -glycidoxypropyltrimethoxysilane, - glycidoxypropylmethyldiethoxysilane, -glycidoxypropyltriethoxysilane, 3-mercaptopropyltrimethoxysilane, vinyltrimethoxysilane, vinyltriethoxysilane, - methacryloxypropyltrimethoxysilane, -methacryloxypropyltriethoxysilane, - aminopropyltrimethoxysilane, -aminopropyltriethoxysilane, 3-isocyanatopropyltriethoxysilane, or -acetoacetate tripropyltrimethoxysilane, which may be used alone or as mixtures.

The silane coupling agent may be present in an amount of 0.005 to 5 parts by weight based on 100 parts by weight of the acrylic resin. If the amount of the silane coupling agent is less than 0.005 parts by weight, increase in tack strength may be insignificant. If the amount of the silane coupling agent is greater than 5 parts by weight, bubbles or peeling of the adhesive may occur, thus deteriorating durability.

The adhesive composition of the present invention may further include a tackifier resin in view of adjusting tack.

Examples of the tackifier resin may include, without being limited to, for example, a hydrocarbon resin or a hydrogenated product thereof; a rosin or a hydrogenated product thereof; a rosin ester resin or a hydrogenated product thereof; a terpene resin or a hydrogenated product thereof; a terpene phenolic resin or a hydrogenated product thereof; and a polymerized rosin resin or a polymerized rosin ester resin, which may be used alone or as mixtures.

The tackifier resin may be present in an amount of 1 to 100 parts by weight based on 100 parts by weight of the acrylic resin. If the amount of the tackifier resin is less than 1 part by weight, the tackifier resin may not function properly. If the amount of the tackifier resin is greater than 100 parts by weight, improvement in compatibility and/or cohesiveness may be insignificant.

In addition, the adhesive composition of the present invention may further include at least one additive selected from the group consisting of epoxy resins, crosslinking agents, UV stabilizers, antioxidants, toning agents, reinforcing agents, fillers, antifoaming agents, surfactants, and plasticizers so long as the additive does not affect the advantageous effects of the present invention.

The present invention also relates to an adhesive film for a touch panel which includes a base film and an adhesive layer formed on one side or both sides of the base film and including a cured product of the adhesive composition according to the present invention.

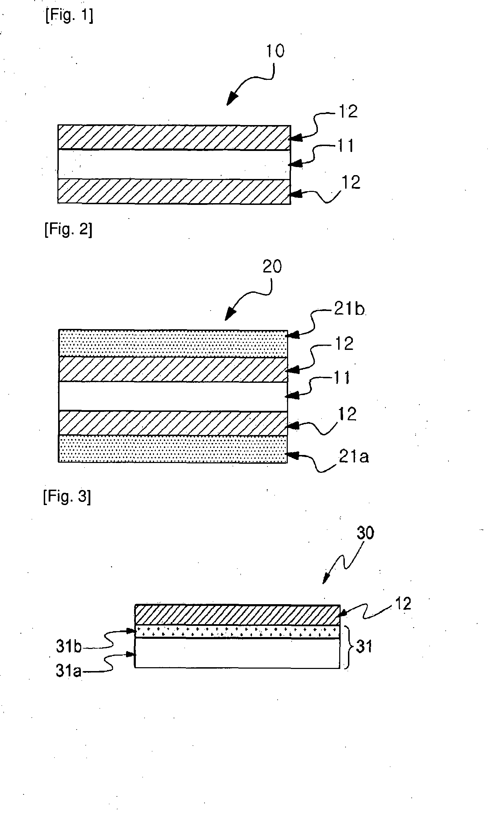

Fig. 1 is a sectional view of an adhesive film 10 according to one embodiment of the present invention. As shown in Fig. 1, the adhesive film 10 may include a base film 11 and adhesive layers 12 on opposite sides of the base film 11. However, the adhesive film of Fig. 1 is provided for illustrative purposes only. That is, in the adhesive film of the present invention, an adhesive layer may be formed on only one side of a base film, or only a sheet-type adhesive layer may be present without a base film as necessary.

There is no particular restriction as to a method of manufacturing the adhesive layers by curing the adhesive composition. In the present invention, for example, the adhesive composition or a coating solution prepared using the same is applied to a proper substrate using a general instrument, e.g., a bar coater, and cured, thereby preparing an adhesive layer.

Curing may be carried out after volatile components or reaction residues included in the adhesive composition or the coating solution, which cause bubbles, are thoroughly removed. Accordingly, decrease in the coefficient of elasticity of the adhesive due to too low a crosslinking density or molecular weight may be prevented. Also, it is possible to prevent a problem that bubbles between adhesive layers at high temperature grow larger and form scatterers.

There is no particular restriction as to a method of curing the adhesive composition or the coating solution. For example, curing may be carried out by irradiating the coating layer with ultraviolet light or aging the coating layer under predetermined conditions.

In the adhesive film, the adhesive layer has a thickness of 50 to 300 $\mu$m, preferably 100 to 200 $\mu$m. Within this range, the adhesive film can be applied to a thin touch panel or touchscreen, have excellent durability, adhesion, and wettability, and hide a pattern of a conductive film when attached to the conductive layer formed with the pattern.

There is no particular restriction as to the kind of the base film, and typical plastic films known in the art may be used. Examples of the base film may include at least one selected from the group consisting of a polyethylene terephthalate (PET) film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film. Preferably, a PET film is used, without being limited thereto.

In the adhesive film, the base film has a thickness of 25 to 300 $\mu$m, preferably 30 to 200 $\mu$m. Within this range, the adhesive film can be applied to a thin touch panel or touchscreen, exhibit excellent durability, adhesion, and wettability, and hide a pattern of a conductive film when attached to the conductive layer formed with the pattern.

The adhesive film of the present invention may further include a release film formed on the adhesive layers as necessary.

Fig. 2 is a sectional view of an adhesive film 20 according to another embodiment of the present invention. As shown in Fig. 2, the adhesive film 20 may include a base film 11, adhesive layers 12 formed on opposite sides of the base film 11, and release films 21a and 21b formed on the adhesive layers 12.

There is no particular restriction as to the kind of the release films used in the present invention. In the present invention, for example, one surface of various plastic films used as the base film may be subjected to proper release treatment for use as a release film. In this case, examples of a release agent used for release treatment may include alkyd, silicone, fluorine, unsaturated ester, polyolefin, or wax release agents. Among these, alkyd, silicone, and fluorine release agents may be used in view of heat resistance, without being limited thereto.

The thickness of the release film is not particularly limited but may be adjusted properly depending on application. For example, the release film has a thickness of 10 to 100 $\mu$m, preferably 30 to 90 $\mu$m, and more preferably about 40 to 80 $\mu$m.

The present invention also relates to a touch panel which includes a conductive plastic film having a conductive layer formed on one surface thereof; and an adhesive layer attached to the conductive layer of the conductive plastic film and including a cured product of the adhesive composition of the present invention.

The touch panel employing the adhesive composition according to the present invention may be, for example, an electrostatic capacitive touch panel. Also, any structure and any formation method may be employed to prepare such a touch panel, without being particularly limited, so long as the adhesive composition of the present invention is used.

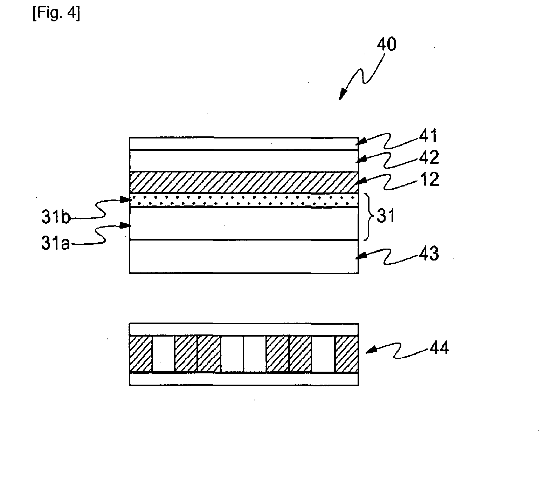

Figs. 3 and 4 are sectional views of touch panels 30 and 40 according to exemplary embodiments of the present invention.

As shown in Fig. 3, the touch panel 30 according to one embodiment of the present invention may include a conductive plastic film 31 including a plastic substrate 31a and a conductive layer 31b formed on one surface of the substrate 31a; and an adhesive layer 12 including a cured product of the adhesive composition of the present invention and attached to the conductive layer 31b of the conductive plastic film 31.

There is no particular restriction as to the kind of the conductive plastic film, and any conductive film known in the art may be used. In one embodiment of the present invention, the conductive film may be a transparent plastic film having an indium tin oxide (ITO) electrode layer formed on one surface thereof. Examples of the transparent plastic film may include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film. Preferably, a PET film is used, without being limited thereto.

Fig. 4 illustrates a touch panel according to another embodiment of the present invention. As shown in Fig. 4, the touch panel 40 may include an antireflection coating 41, a protection film 42, an adhesive layer 12, a plastic film 31a having a conductive layer 31b formed on one surface thereof, and a transparent substrate 43 from the top. The touch panel 40 including such layers may be attached to a display device, such as a liquid crystal display (LCD) 44. In the structure shown in Fig. 4, the adhesive layer 12 including a cured product of the adhesive composition according to the present invention may be attached to the conductive layer 31b of a conductive plastic film 31.

In the structure of Fig. 4, there is no particular restriction as to the kinds and formation methods of the other elements than the adhesive layer including the cured product of the adhesive composition according to the invention, and any general structure and any general method may be used to prepare the other elements.

[Mode for Invention]

**Examples**

Hereinafter, the present invention will be explained in more detail with reference to examples according to the present invention and comparative examples. These examples are provided for illustrative purposes only and are not to be in any way construed as limiting the present invention.

**Preparative Example 1: Preparation of partially polymerized acrylic resin (A)**

55 parts by weight of ethylhexyl acrylate (EHA), 20 parts by weight of isobornyl acrylate (IBOA), and 25 parts by weight of 2-hydroxyethyl acrylate (HEA) were placed in a 1L reactor equipped with a reflux condenser for reflux under a nitrogen atmosphere and for easy temperature adjustment and partially polymerized, thereby preparing syrup having a viscosity of 3,500 cps. The resulting partially polymerized acrylic resin (A) has a weight average molecular weight of 1,200,000.

**Preparative Example 2: Preparation of** partially **polymerized acrylic resin (B)**

A partially polymerized acrylic resin (B) was prepared in the same manner as in Preparative Example 1. The partially polymerized acrylic resin (B) has a weight average molecular weight of 300,000.

**Preparative Example 3: Preparation of partially polymerized acrylic resin (C)**

A partially polymerized acrylic resin (C) was prepared in the same manner as in Preparative Example 1. The partially polymerized acrylic resin (C) has a weight average molecular weight of 1,000,000.

**Preparative Example 4: Preparation of partially polymerized acrylic resin (D)**

A partially polymerized acrylic resin (D) was prepared in the same manner as in Preparative Example 1. The partially polymerized acrylic resin (D) has a weight average molecular weight of 700,000.

**Example 1**

100 parts by weight of the partially polymerized acrylic resin (A) prepared in Preparative Example 1, 0.2 parts by weight of hexanediol diacrylate as a multifunctional crosslinking agent, 0.2 parts by weight of a coupling agent (KBM 403, Shin-Etsu Chemical Co., Ltd.), 1.5 parts by weight of urethane acrylate, and 0.3 parts by weight of a photoinitiator (Irgacure 651, Ciba Specialty Chemicals Corp.) were mixed into an adhesive composition, from which a coating solution having a viscosity of 1,500 to 2,500 cps was prepared. The coating solution was applied using a bar coater to a release-treated PET film (thickness: 75 $\mu$m) to a thickness of 100 $\mu$m after UV curing. The product was cured by ultraviolet irradiation for 10 minutes using a UV lamp, thereby forming an adhesive film.

**Example 2 and 3 and Comparative Examples 1 to 4**

Adhesive films were prepared in the same manner as in Example 1 except that adhesive compositions were prepared according to compositions of Table 1.

**TABLE 1**

| | | | Example | | | Comparative Example | | | |
|---|---|---|---|---|---|---|---|---|---|
| | | | 1 | 2 | 3 | 1 | 2 | 3 | 4 |
| Acrylic resin | A | | 100 | 100 | - | 100 | 100 | - | - |
| | B | | - | - | - | - | - | 100 | - |
| | C | | - | - | 100 | - | - | - | - |
| | D | | - | - | - | - | - | - | 100 |
| Multifunctional crosslinking agent | | | 0.1 | 0.2 | 0.1 | 0 | 0.2 | 0.2 | 0.1 |
| Coupling agent | | | 0.2 | 0.2 | 0.2 | 0.2 | 0.2 | 0.2 | 0.2 |
| Urethane acrylate | | | 1.5 | 1.5 | 1.5 | 1.5 | 0 | 1.5 | 1.5 |
| Photoinitiator | | | 0.3 | 0.3 | 0.3 | 0.3 | 0.3 | 0.3 | 0.3 |
| Unit: Parts by weight<br>Multifunctional crosslinking agent: Hexanediol diacrylate<br>Coupling agent: KBM 403 (Shin-Etsu Chemical Co., Ltd.)<br>Photoinitiator: Irgacure 651, Ciba Specialty Chemicals Corp.) | | | | | | | | | |

Physical properties of the adhesive films prepared in the examples and the comparative example were evaluated as follows.

**1. shear strength measured at 100°C**

Each of the adhesive films prepared in the examples and the comparative examples was cut into a 1 in x 1 in x 72 $\mu$m (width x length x thickness) piece. After removing the release film, one side of the adhesive film was attached to an ITO surface of a PET film having the ITO surface, and the other side thereof was attached to an SUS surface. Here, attaching the adhesive film was carried out by rolling a 5 kg roller back and forth five times in accordance with ASTM D1002. Subsequently, the adhesive film was left at 100°C for 1 hour and then evaluated as to shear strength measured at 100°C at a crosshead speed of 5 mm/min using a universal testing machine (UTM, Zwick).

**2. Visual recognition of pattern**

Each of the adhesive films prepared in the examples and the comparative examples was cut into a 1 in x 1 in x 72 $\mu$m (width x length x thickness) piece. After removing the release film, the adhesive film was attached to patterned ITO (NittoDenco Corp.) and stored in a constant temperature and humidity room at 60°C and 90 %RH for 48 hours, observing whether the pattern of the ITO was visible thereafter. Visual recognition of the pattern is evaluated as follows.

<Evaluation of visual recognition of pattern>

O: ITO pattern visually recognized under the foregoing conditions and disappeared within 4 hours
Δ: ITO pattern visually recognized under the foregoing conditions and disappeared after 10 hours
X: ITO pattern visually recognized under the foregoing conditions and maintained for 24 hours

The evaluation results are illustrated in Table 2.

**TABLE 2**

|  | Example | | | Comparative Example | | | |
|---|---|---|---|---|---|---|---|
|  | 1 | 2 | 3 | 1 | 2 | 3 | 4 |
| High-temperature shear strength (kg/in$^2$) | 23 | 25 | 22 | 17 | 16 | 14 | 15 |
| Visual recognition of pattern | × | × | × | Δ | ○ | ○ | Δ |

As seen from Table 2, Examples 1 to 3 including the multifunctional crosslinking agent and urethane acrylate have a shear strength measured at 100°C of 20 kg/in$^2$ or higher, so that the ITO pattern disappeared within 4 hours under high temperature and high humidity conditions. However, Comparative Example 1 which does not include a multifunctional crosslinking agent has low shear strength measured at 100°C, so that the ITO pattern disappeared after 10 hours under high temperature and high humidity conditions. Comparative Example 2 not including urethane acrylate also has low shear strength measured at 100°C, so that the ITO pattern was maintained for 24 hours under high temperature and high humidity conditions. Further, although Comparative Example 3 includes both the multifunctional crosslinking agent and urethane acrylate, the partially polymerized acrylic resin has a considerably low weight average molecular weight of 300,000, so that the ITO pattern was maintained for 24 hours under high temperature and high humidity conditions. Likewise, although Comparative Example 4 includes both the multifunctional crosslinking agent and urethane acrylate, the partially polymerized acrylic resin has a low weight average molecular weight of 700,000, so that the ITO pattern was maintained for 24 hours under high temperature and high humidity conditions.
That is, the examples using the adhesive compositions according to the present invention have a shear strength measured at 100°C of 20 kg/in$^2$ or higher, so that the ITO pattern was not visually recognized under high temperature and high humidity conditions when attached to the patterned ITO.

[Industrial Applicability]

The present invention relates to an adhesive composition for a touch panel, an adhesive film, and a touch panel. The adhesive composition for the touch panel according to the present invention can be applied to a touch panel, for example, to an electrostatic capacitive touch panel, for hiding a pattern of a conductive layer even when attached directly to the conductive layer formed with the pattern. Also, the adhesive composition of the present invention can prevent yellowing and whitening.

**Claims**

**1.** An adhesive composition for a touch panel comprising a partially polymerized acrylic resin; a multifunctional crosslinking agent; and urethane acrylate and satisfying Equation 1:

$$\text{Equation 1:} \quad X = 31000 \text{ kg/m2 } (20 \text{ kg/in}^2) \text{ or higher,}$$

wherein X is the shear strength of an adhesive measured at 100°C that is a cured product of the adhesive composition, measured on a sample at a crosshead speed of 5 mm/min, the sample being prepared as follows: one side of the adhesive is attached to a first substrate and the other side thereof is attached to a second substrate, followed by storage at 100°C for 1 hour wherein the partially polymerized acrylic resin has a weight average molecular weight measured by gel permeation chromatography of 1,000,000 or higher and a degree of polymerization of 5 to 60%, and

the multifunctional crosslinking agent comprises multifunctional (meth)acrylates.

2. The adhesive composition according to claim 1, wherein the partially polymerized acrylic resin comprises a polymer of a monomer mixture comprising a (meth)acrylic acid ester monomer and a crosslinking monomer.

3. The adhesive composition according to claim 2, wherein the (meth)acrylic acid ester monomer comprises alkyl (meth)acrylates.

4. The adhesive composition according to claim 2 or 3, wherein the crosslinking monomer comprises a hydroxyl group containing monomer, a carboxylic group containing monomer, or a nitrogen containing monomer.

5. The adhesive composition according to any previous claim, wherein the multifunctional (meth)acrylates comprise at least one selected from the group consisting of hexanediol di(meth)acrylate, trimethylolpropanetrioxyethyl di(meth)acrylate, alkylene glycol di(meth)acrylate, dialkylene glycol di(meth)acrylate, trialkylene glycol di(meth)acrylate, dicyclopentenyl di(meth)acrylate, dicyclopentenyloxyethyl di(meth)acrylate, neopentyl glycol di(meth)acrylate, dipentaerythritolhexa di(meth)acrylate, trimethylolpropane tri(meth)acrylate, and pentaerythritol tri(meth)acrylate.

6. The adhesive composition according to anyone of claims 1-5, wherein the multifunctional crosslinking agent is present in an amount of 0.01 to 10 parts by weight based on 100 parts by weight of the partially polymerized acrylic resin.

7. The adhesive composition according to any one of claim 1-6, wherein the urethane acrylate is present in an amount of 0.1 to 10 parts by weight based on 100 parts by weight of the partially polymerized acrylic resin.

8. The adhesive composition according to any one of claims 1-7, further comprising a photoinitiator.

9. The adhesive composition according to claim 8, wherein the photoinitiator comprises benzoin initiators, hydroxyketone initiators, or aminoketone initiators.

10. An adhesive film for a touch panel comprising:

   a base film; and
   an adhesive layer formed on one side or both sides of the base film and comprising a cured product of the adhesive composition of any one according to claims 1 to 9.

11. The adhesive film according to claim 10, wherein the adhesive layer has a thickness of 50 to 300 $\mu$m.

12. The adhesive film according to claim 10 or 11, wherein the base film comprises at least one selected from the group consisting of a polyethylene terephthalate (PET) film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film.

13. The adhesive film according to any of the claims 10-12, wherein the base film has a thickness of 25 $\mu$m to 300 $\mu$m.

14. A touch panel comprising:

   a conductive plastic film having a conductive layer formed on one surface thereof; and
   an adhesive layer attached to the conductive layer of the conductive plastic film and comprising a cured product of the adhesive composition according to any one of claims 1 to 9.


**Patentansprüche**

1. Haftzusammensetzung für einen Berührungsbildschirm umfassend ein teilweise polymerisiertes Acrylharz; ein multifunktionales Vernetzungsmittel; und Urethanacrylat, welche die Gleichung 1 erfüllt:

Gleichung 1:   X = 31000 kg/m2 (20 kg/in$^2$) oder höher,

wobei X die Scherfestigkeit eines Haftmittels ist, gemessen bei 100 °C, welches ein ausgehärtetes Produkt der Haftzusammensetzung ist, gemessen auf einem Muster bei einer Traversengeschwindigkeit von 5 mm/min, wobei das Muster wie folgt hergestellt wird: eine Seite des Haftmittels wird an einem ersten Substrat angehaftet, und die andere Seite davon wird an einem zweiten Substrat angehaftet, gefolgt von einer Lagerung bei 100 °C für 1 Stunde, wobei das teilweise polymerisierte Acrylharz ein durchschnittliches Molekulargewicht, gemessen durch Gelpermeationschromatographie, von 1.000.000 oder höher und einen Polymerisationsgrad von 5 bis 60 % aufweist, und das multifunktionale Vernetzungsmittel multifunktionale (Meth)acrylate umfasst.

2.  Haftzusammensetzung nach Anspruch 1, wobei das teilweise polymerisierte Acrylharz ein Polymer einer Monomermischung umfasst, die ein (Meth)acrylsäureestermonomer und ein Vernetzungsmonomer umfasst.

3.  Haftzusammensetzung nach Anspruch 2, wobei das (Meth)acrylsäureestermonomer Alkyl(meth)acrylate umfasst.

4.  Haftzusammensetzung nach Anspruch 2 oder 3, wobei das Vernetzungsmonomer ein eine Hydroxylgruppe enthaltendes Monomer, ein eine Carboxylgruppe enthaltendes Monomer oder ein einen Stickstoff enthaltendes Monomer umfasst.

5.  Haftzusammensetzung nach einem der vorgehenden Ansprüche, wobei die multifunktionalen (Meth)acrylate zumindest eines ausgewählt aus der Gruppe bestehend aus Hexandioldi(meth)acrylat, Trimethylolpropantrioxyethyldi(meth)acrylat, Alkylenglycoldi(meth)acrylat, Dialkylenglycoldi(meth)acrylat, Trialkylenglycoldi(meth)acrylat, Dicyclopentenyldi(meth)acrylat, Dicyclopentenyloxyethyldi(meth)acrylat, Neopentylglycoldi(meth)acrylat, Dipentaerythritolhexadi(meth)acrylat, Trimethylolpropantri(meth)acrylat und Pentaerythritoltri(meth)acrylat umfasst.

6.  Haftzusammensetzung nach einem der Ansprüche 1-5, wobei das multifunktionale Vernetzungsmittel in einer Menge von 0,01 bis 10 Gewichtsteilen bezogen auf 100 Gewichtsteile des teilweise polymerisierten Acrylharzes vorliegt.

7.  Haftzusammensetzung nach einem der Ansprüche 1-6, wobei das Urethanacrylat in einer Menge von 0,1 bis 10 Gewichtsteilen bezogen auf 100 Gewichtsteile des teilweise polymerisierten Acrylharzes vorliegt.

8.  Haftzusammensetzung nach einem der Ansprüche 1-7, ferner umfassend einen Photoinitiator.

9.  Haftzusammensetzung nach Anspruch 8, wobei der Photoinitiator Benzoin-, Hydroxyketon- oder Aminoketoninitiatoren umfasst.

10.  Haftfilm für einen Berührungsbildschirm, umfassend:

einen Basisfilm; und
eine Haftschicht, die auf einer oder beiden Seiten des Basisfilms gebildet ist und ein ausgehärtetes Produkt der Haftzusammensetzung nach einem der Ansprüche 1 bis 9 umfasst.

11.  Haftfilm nach Anspruch 10, wobei die Haftschicht eine Stärke von 50 μm bis 300 μm aufweist.

12.  Haftfilm nach Anspruch 10 oder 11, wobei der Basisfilm zumindest einen umfasst, welcher aus der Gruppe bestehend aus einem Polyethylenterephthalatfilm (PET-Film), einem Polytetrafluorethylenfilm, einem Polyethylenfilm, einem Polypropylenfilm, einem Polybutenfilm, einem Polybutadienfilm, einem Vinylchloridcopolymerfilm, einem Polyurethanfilm, einem Ethylenvinylacetatfilm, einem Ethylenpropylencopolymerfilm, einem Ethylenethylacetatcopolymerfilm, einem Ethylenmethylacetatcopolymerfilm und einem Polyimidfilm ausgewählt ist.

13.  Haftfilm nach einem der Ansprüche 10-12, wobei der Basisfilm eine Stärke von 25 μm bis 300 μm aufweist.

14.  Berührungsbildschirm umfassend:

eine leitende Kunststofffolie, die eine auf einer Oberfläche davon gebildete leitende Schicht aufweist; und
eine Haftschicht, die an der leitenden Schicht der leitenden Kunststofffolie angehaftet ist und ein ausgehärtetes Produkt der Haftzusammensetzung nach einem der Ansprüche 1 bis 9 umfasst.

**Revendications**

1. Composition adhésive pour écran tactile comprenant une résine acrylique partiellement polymérisée; un agent de réticulation multifonctionnel; et l'acrylate d'uréthane et satisfaisant l'équation 1:

   Equation 1:   $X = 31000$ kg/m2 (20 kg/in$^2$) ou plus,

   dans laquelle X est la résistance au cisaillement d'un adhésif mesuré à 100°C qui est un produit durci de la composition adhésive, mesuré sur un échantillon à une vitesse de traverse de 5 mm/min, l'échantillon étant préparé comme suit: un côté de l'adhésif est attaché à un premier substrat et l'autre de ses côtés est attaché à un deuxième substrat, suivi par un stockage à 100°C pendant 1 heure, la résine acrylique partiellement polymérisée présentant un poids moléculaire moyen en poids mesuré par la chromatographie par perméation de gel de 1.000.000 ou plus et un degré de polymérisation compris entre 5 et 60%, et l'agent de réticulation multifonctionnel comprend des (méth)acrylates multifonctionnels.

2. Composition adhésive selon la revendication 1, dans laquelle la résine acrylique partiellement polymérisée comprend un polymère d'un mélange de monomères comprenant un monomère d'ester d'acide (méth)acrylique et un monomère de réticulation.

3. Composition adhésive selon la revendication 2, dans laquelle le monomère d'ester (méth)acrylique comprend des (méth)acrylates d'alkyle.

4. Composition adhésive selon la revendication 2 ou 3, dans laquelle le monomère de réticulation comprend un monomère contenant un groupe hydroxyle, un monomère contenant un groupe carboxylique, ou un monomère contenant de l'azote.

5. Composition adhésive selon l'une quelconque des revendications, dans laquelle les (méth)acrylates multifonctionnels comprennent au moins un élément choisi dans le groupe constitué par hexanediol-di(méth)acrylate, triméthylolpropanetrioxyéthyl-di(méth)acrylate, alkylèneglycole-di(méth)acrylate, dialkylèneglycole-di(méth)acrylate, trialkylèneglycole-di(méth)acrylate, dicyclopényle-di(méth)acrylate, dicyclopényloxyéthyle-di(méth)acrylate, néopentylglycole-di(méth)acrylate, dipentaerythritolhexa-di(méth)acrylate, triméthylolpropane-tri(méth)acrylate et pentaérythritole-tri(méth)acrylate.

6. Composition adhésive selon l'une quelconque des revendications 1-5, dans laquelle l'agent de réticulation multifonctionnel est présent dans une quantité comprise entre 0,01 et 10 parties en poids pour 100 parties en poids de la résine acrylique partiellement polymérisée.

7. Composition adhésive selon l'une quelconque des revendications 1-6, dans laquelle l'acrylate d'uréthane est présent dans une quantité de 0,1 à 10 parties en poids basée sur 100 parties en poids de la résine acrylique partiellement polymérisée.

8. Composition adhésive selon l'une quelconque des revendications 1-7, comportant en outre un photo-initiateur.

9. Composition adhésive selon la revendication 8, dans laquelle le photo-initiateur comprend des initiateurs benzoïne, hydroxycétone, ou aminocétone.

10. Film adhésif pour un panneau tactile, comprenant:

    un film de base; et
    une couche adhésive formée sur un côté ou sur les deux côtés du film de base et comprenant un produit durci de la composition adhésive selon l'une quelconque des revendications 1 à 9.

11. Film adhésif selon la revendication 10, dans lequel la couche adhésive présente une épaisseur comprise entre 50

μm et 300 μm.

**12.** Film adhésif selon la revendication 10 ou 11, dans lequel le film de base comprend au moins un film choisi dans le groupe constitué par un film polyéthylène téréphthalate (PET), un film de polytétrafluoroéthylène, un film polyéthylène, un film polypropylène, un film polybutène, un film polybutadiène, un film de copolymère de chlorure de vinyle, un film de polyuréthane, un film d'éthylène-vinyle-acétate, un film de copolymère éthylène-propylène, un film de copolymère d'acétate d'éthylène-éthyle, un film de copolymère d'acétate d'éthylène-méthyle et un film de polyimide.

**13.** Film adhésif selon l'une quelconque des revendications 10-12, dans leque le film de base présente une épaisseur comprise entre 25 μm et 300 μm.

**14.** Panneau tactile comprenant:

un film de matière plastique conductrice ayant une couche conductrice formée sur une surface de celle-ci; et une couche adhésive fixée à la couche conductrice du film de matière plastique conductrice et comprenant un produit durci de la composition adhésive selon l'une quelconque des revendications 1 à 9.

[Fig. 1]

[Fig. 2]

[Fig. 3]

[Fig. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1574557 A1
- EP 2033998 A2
- US 2010255253 A1